# EUROPÄISCHE PATENTSCHRIFT

(11) **EP 3 756 944 B1**
(45) Veröffentlichungstag und Bekanntmachung des Hinweises auf die Patenterteilung: **28.06.2023**
(21) Anmeldenummer: 20184639.1
(22) Anmeldetag: 09.09.2016
(51) Int. Cl.: B60N 2/28

(54) **KINDERSITZ ZUR ANBRINGUNG AUF EINEM KRAFTFAHRZEUG**
CHILD SEAT FOR MOUNTING ON A SEAT OF AN AUTOMOTIVE VEHICLE
SIEGE ENFANT A MONTER SUR UN SIEGE DE VEHICULE AUTOMOBILE

(30) Priorität: 09.09.2015 DE 202015104792 U
(43) Veröffentlichungstag der Anmeldung: 30.12.2020
(62) Teilanmeldung aus: 16763053.2
(73) Patentinhaber: CYBEX GmbH, 95448 Bayreuth (DE)
(72) Erfinder: POS, Martin, 95444 Bayreuth (DE)
(74) Vertreter: Meissner Bolte Partnerschaft mbB

(56) Entgegenhaltungen:
- DE-U1-202013 103 189
- FR-A1- 2 864 482

## Beschreibung

Die Erfindung betrifft einen Kindersitz zur Anbringung auf einem Kraftfahrzeugsitz gemäß Anspruch 1.

In diesem Zusammenhang sei angemerkt, dass im Rahmen dieser Erfindung der Begriff "Kindersitz" als Oberbegriff für (klassische) Kindersitze und Babyschalen zu verstehen ist. Somit sind für einen Kindersitz vorgesehene Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

Ein Kindersitz ist beispielsweise aus WO 2013/189819 A1 bekannt. Dort ist auch (in Fig. 1) ein Stützbein gezeigt, über das der Kindersitz auf einem Untergrund (dem Fußraum) abgestützt werden kann. Weiterhin ist
z.B. aus den Figuren 2, 3A, 3B der FR 2864 482 A1 ein Kindersitz zur Anbringung auf einem Kraftfahrzeugsitz bekannt, umfassend ein Sitzelement sowie mindestens ein Stützbein zum Abstützen des Kindersitzes an einem Untergrund, insbesondere Fußraum des Kraftfahrzeuges, wobei eine Anzeigevorrichtung vorgesehen ist, die ausgebildet ist, um einen Bodenkontakt des Stützbeins mit dem Untergrund, insbesondere Fußraum, anzuzeigen, wobei das Stützbein mindestens einen oberen teleskopartigen Abschnitt und einen unteren teleskopartigen Abschnitt aufweist, die zur Verlängerung und Verkürzung des Stützbeines gegeneinander verschieblich sind. Ein weiterer Kindersitz ist z.B. aus der DE 20 2013 103 189 U1 bekannt.

Es ist Aufgabe der Erfindung, eine Anzeigemöglichkeit bereitzustellen, über die dem Benutzer angezeigt werden kann, wenn das Stützbein in Kontakt mit dem Boden ist, wobei die Anzeige vorzugsweise möglichst einfach und sicher erfolgen soll.

Diese Aufgabe wird durch einen Kindersitz gemäß Anspruch 1 gelöst.

Insbesondere wird die Aufgabe durch einen Kindersitz zur Anbringung an einem Kraftfahrzeugsitz gelöst, umfassend ein Sitzelement sowie mindestens ein Stützbein zum Abstützen des Kindersitzes an einem Untergrund, insbesondere Fußraum, eines Kraftfahrzeuges, wobei eine Anzeigevorrichtung vorgesehen ist, die ausgebildet ist, um einen Bodenkontakt des Stützbeins mit dem Untergrund, insbesondere Fußraum, anzuzeigen, wobei das Stützbein mindestens einen oberen, teleskopartigen Abschnitt und mindestens einen unteren, teleskopartigen Abschnitt aufweist, die zur Verlängerung und Verkürzung des Stützbeines gegeneinander verschieblich sind, wobei zwischen dem unteren teleskopartigen Abschnitt und der Anzeigevorrichtung eine Wirkverbindung vorliegt, die derart ausgebildet ist, dass eine Verlagerung des unteren Abschnittes gegenüber dem oberen Abschnitt aufgrund eines Bodenkontaktes eines (unteren bzw. distalen) Stützbeinendes zu einem Auslösen der Anzeigevorrichtung führt, wobei die Wirkverbindung eine Stange mit einer Länge von mindestens 10 cm umfasst.

Ein Kerngedanke der vorliegenden Erfindung liegt darin, im Hinblick auf die Anzeige der Bodenkontaktierung auszunutzen, dass erster Abschnitt und zweiter Abschnitt prinzipiell gegeneinander verschieblich sind, und weiterhin auszunutzen, dass aufgrund eines Bodenkontaktes eine gewisse Kraft auf den unteren Abschnitt wirkt, über die eine Verschiebung des unteren Abschnitts gegenüber dem oberen Abschnitt ermöglicht werden kann. Insbesondere ist erfindungsgemäß also kein elektronischer Sensor notwendig, der an einem Fuß des Stützbeins angeordnet ist und eine Anzeigevorrichtung ansteuert, wofür eine vergleichsweise teure Elektronik notwendig wäre und außerdem eine Batterie, die ggf. ausgetauscht werden muss nach einer gewissen Zeitdauer. Durch die Wirkverbindung mit dem unteren Abschnitt des Stützbeins wird es außerdem ermöglicht, dass eine Betätigung klar definiert erfolgen kann (da die Relativbewegung zwischen oberen und unterem Abschnitt ausgenutzt wird), so dass eine Wackelbewegung oder ein Verkanten (wie beispielsweise bei einer Lösung, bei der ein verschiebliches Element in einem proximalen Endabschnitt des Stützbeines angeordnet ist) während des Auslösens der Anzeigevorrichtung vermieden oder zumindest reduziert wird.

Konkret ist die Wirkverbindung ausgebildet, um eine (Druck-)Kraft von dem unteren Abschnitt zu der Anzeigevorrichtung mechanisch zu übertragen. Im Allgemeinen handelt es sich bei der Wirkverbindung um eine mechanische (kraftübertragende) Wirkverbindung. Insbesondere kann auf eine elektrische Übertragung oder sonstige elektrische oder elektronische Komponenten vollständig verzichtet werden. Dies erhöht die Zuverlässigkeit der Anzeige der Bodenkontaktierung mit einfachen Mitteln.

Die Wirkverbindung umfasst eine Stange. Diese Stange kann einen runden, elliptischen oder vieleckigen Querschnitt, z.B. rechteckigen Querschnitt, oder profilartigen Querschnitt, wie beispielsweise einen U-förmigen oder C-förmigen Querschnitt, aufweisen. Damit wird auf konstruktiv einfache Art und Weise eine Übertragung der Wirkung ermöglicht, was Kosten reduziert.

Die Wirkverbindung und/oder die Stange kann/können eine Länge aufweisen, die mindestens 60%, vorzugsweise mindesten 80 % der Länge des oberen Abschnittes ausmacht. Die Wirkverbindung und/oder die Stange kann/können eine Länge von mindesten 15 cm aufweisen.

Vorzugsweise ist eine Verriegelungseinrichtung zur Einstellung (bzw. Verriegelung) einer Relativposition zwischen oberen und unterem Abschnitt vorgesehen. Weiter vorzugsweise sind im verriegelten Zustand oberer und unterer Abschnitt um eine gewisse Wegstrecke, beispielsweise kleiner oder gleich 2 cm, bewegbar. Die Wegstrecke kann mindestens 3 mm betragen. Dadurch wird es ermöglicht, dass im verriegelten Zustand (in dem die Länge des Stützbeins, abgesehen von der eben genannten Wegstrecke, prinzipiell festgelegt ist) dennoch eine gewisse (vordefinierte) Relativbewegung zugelassen ist, so dass über die Wirkverbindung die Anzeigevorrichtung ausgelöst werden kann. Dadurch übernimmt die Verriegelungseinrichtung (zumindest teilweise) die Aufgabe einer Detektion der Bodenkontaktierung, was insgesamt zu einer einfachen und kostengünstigen, aber dennoch zuverlässigen, Struktur führt.

Die Verriegelungseinrichtung kann ein Langloch und/oder einen Raststift aufweisen, wobei der Raststift entweder (nur), nämlich in der verrasteten Stellung, innerhalb des Langlochs gleiten kann, oder derart betätigt ist, dass sich oberer und unterer Abschnitt frei, bis zu einer maximalen (bzw. minimalen) Einstell-Länge des Stützbeins, gegeneinander bewegen können. Das Langloch ist vorzugsweise in dem oberen Abschnitt vorgesehen.

Der Raststift ist in der verrasteten Stellung vorzugsweise so mit dem unteren Abschnitt verbunden, dass sich dieser gegenüber dem Raststift nicht bewegen kann. Insgesamt wird eine konstruktiv einfache Art und Weise geschaffen, um gleichzeitig eine Verrastung zwischen dem oberen und unteren Abschnitt durchführen zu können und eine einfache Anzeige der Bodenkontaktierung zu ermöglichen.

Weiterhin kann der Kindersitz eine Feder aufweisen, deren erstes Ende ortsfest an dem oberen Abschnitt (mittelbar oder unmittelbar) angebracht ist und deren zweites Ende ortsfest an der Wirkverbindung (mittelbar oder unmittelbar), insbesondere an dem Stab, angeordnet ist, derart, dass die Feder den oberen und unteren Abschnitt, im verrasteten Zustand, voneinander weg drängt. Vorzugsweise ist die Feder, im verrasteten Zustand, mittelbar über die Verriegelungseinrichtung (ggf. ausschließlich über die Verriegelungseinrichtung) mit dem unteren Abschnitt verbunden. Dadurch wird eine Grundstellung ermöglicht, die das Stützbein einnimmt, wenn keine Bodenkontaktierung vorliegt. Wenn jedoch eine Bodenkontaktierung vorliegt, dann wird durch den DruccKontakt mit dem Boden der untere Abschnitt gegen die Wirkung der Feder in Richtung des oberen Abschnittes gedrängt, so dass eine Anzeige der Bodenkontaktierung (über die Wirkverbindung) realisiert werden kann. Insgesamt handelt es sich hier um eine vergleichsweise einfache Struktur, die zuverlässig eine Bodenkontaktierung anzeigen lässt.

In einer konkreten Ausführungsform ist die Wirkverbindung, insbesondere Stange, im verrasteten Zustand, ortsfest mit dem unteren Abschnitt verbunden und beweglich gegenüber dem oberen Abschnitt. Auch diese Maßnahme erleichtert eine zuverlässige Anzeige der Bodenkontaktierung.

Die Wirkverbindung, insbesondere Stange, kann im entriegelten Zustand, in dem die Länge des Stützbeines eingestellt werden kann, sowohl gegenüber dem oberen Abschnitt als auch gegenüber dem unteren Abschnitt beweglich sein. Insbesondere ist die Wirkverbindung (und/oder Stange) im entriegelten Zustand nur um die oben erwähnte (geringe) Wegstrecke gegenüber dem oberen Abschnitt bewegbar, jedoch frei gegenüber dem unteren Abschnitt bewegbar (nur begrenzt durch die maximal mögliche Verschiebung des oberen und des unteren Abschnittes gegeneinander, im entriegelten Zustand).

Vorzugsweise ist die Anzeigevorrichtung an einem proximalen Ende des Stützbeines angeordnet. Dadurch wird auf einfache Weise sichergestellt, dass der Benutzer die Anzeigevorrichtung einsehen kann.

Der obere Abschnitt kann den unteren Abschnitt im überlappenden Bereich umschließen.

Der obere Abschnitt und/oder der untere Abschnitt kann/können durch ein Rohr (oder Profil, beispielsweise C- oder U-Profil) ausgebildet werden. Der obere Abschnitt ist vorzugsweise ein äußeres Rohr (oder äußeres C- oder U-Profil). Der untere Abschnitt ist vorzugsweise ein inneres Rohr (oder inneres Profil, insbesondere C-Profil oder U-Profil). Dadurch kann die Einstellung der Länge des Stützbeins vereinfacht werden.

Weitere Ausführungsformen der Erfindung ergeben sich aus den Unteransprüchen.

Abgesehen von dem Stützbein kann der Kindersitz, wie in WO 2013/189819 beschrieben, ausgebildet sein.

Nachfolgend wird die Erfindung anhand eines Ausführungsbeispiels beschrieben, das anhand der Abbildungen näher erläutert wird. Hierbei zeigen:
- Fig. 1: einen Ausschnitt des Stützbeins in einem schematischen Schnitt, in einem verriegelten Zustand;
- Fig. 2: einen Schnitt gemäß Fig. 1 nach einer Bodenkontaktierung; und
- Fig. 3: einen erfindungsgemäßen Kindersitz in einer Seitenansicht.

In der nachfolgenden Beschreibung werden für gleiche und gleichwirkende Teile dieselben Bezugsziffern verwendet.

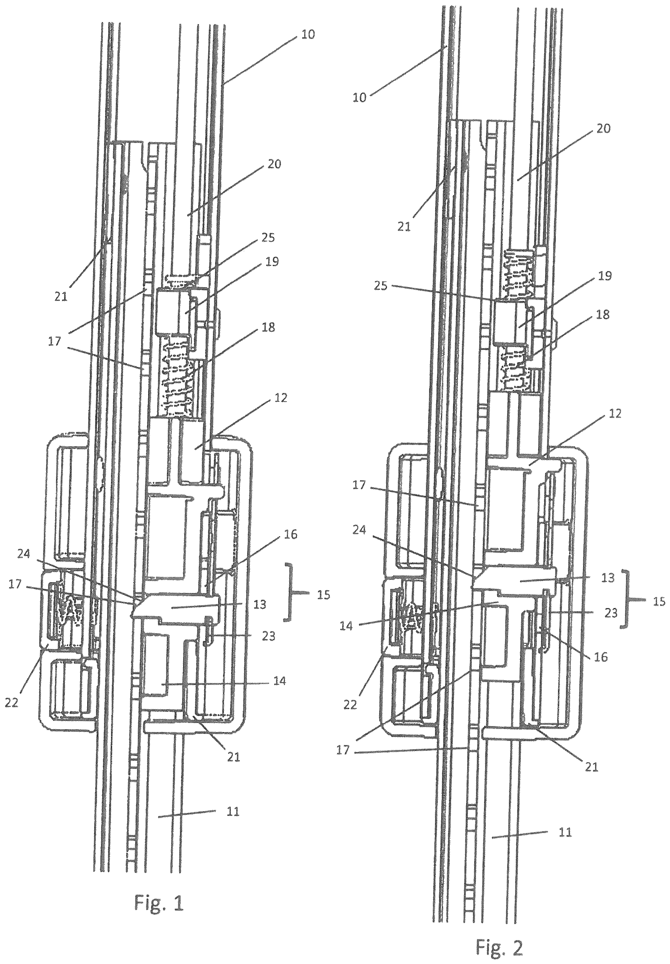

Fig. 1 zeigt einen Ausschnitt eines Stützbeines mit einem oberen Abschnitt 10 und einem unteren Abschnitt 11. Der obere Abschnitt 10 ist einer (nicht gezeigten) Sitzfläche des Kindersitzes näher. Der untere Abschnitt 11 ist einem (nicht gezeigten) Fuß des Stützbeines näher.

Das teleskopartige Stützbein umfasst im vorliegenden Fall genau die zwei Abschnitte 10, 11, die gegeneinander teleskopartig verschieblich sind. Es ist jedoch nicht ausgeschlossen, dass weitere (ggf. teleskopartig verschiebliche) Abschnitte vorgesehen sind.

Der untere Abschnitt 11 ist innerhalb des oberen Abschnittes 10 (in einem Überlappungsbereich) geführt.

Eine Verriegelungseinrichtung 12 umfasst ein Basisteil 14 und einen Raststift 13. Im in den Fig. 1 und 2 verriegelten Zustand des Stützbeins (jedoch auch grundsätzlich im entriegelten Zustand) kann sich die Verriegelungseinrichtung 12 gegenüber dem oberen Abschnitt 10 bewegen und zwar um eine Strecke 15, die durch eine Ausnehmung (Langloch) 16 definiert ist. In dem in den Fig. 1 und 2 verriegelten Zustand greift der Raststift 13 formschlüssig in eine Ausnehmung 17 (einer Vielzahl von Ausnehmungen 17) des unteren Abschnittes ein, so dass sich der untere Abschnitt 11 nicht gegenüber der Verriegelungseinrichtung bewegen kann. Eine Feder 18 bewirkt, dass in einem unbelasteten Zustand des Stützbeines (gemäß Fig. 1) die Verriegelungseinrichtung 12 zusammen mit dem unteren Abschnitt 11 nach unten gedrängt wird. In diesem Zusammenhang sei angemerkt, dass die Feder 18 gemäß den Fig. 1 und 2 rein schematisch abgebildet ist und insbesondere das (in Fig. 1 und 2) obere Ende der Feder 18 gegenüber einem Anschlag 19 gleich positioniert ist. Mit anderen Worten wirkt die Feder 18 zwischen dem ortsfest an dem oberen Abschnitt 10 angebrachten Anschlag 19 und der Verriegelungseinrichtung 12. Ein oberes Ende der Feder kann beispielsweise (innen) an einem oberen Ende 25 des Anschlags 19 anliegen (sowohl in Figur 1 als auch in Figur 2). Der Anschlag 19 ist ortsfest mit dem oberen Abschnitt verbunden.

Wenn nun eine Bodenkontaktierung des Stützbeines stattfindet, resultiert daraus eine (Druck-)Kraft, die den unteren Abschnitt bzw. die Verriegelungseinrichtung 12 entgegen der Federkraft nach oben drückt, so dass die Position in Fig. 2 erreicht wird.

Die Verriegelungseinrichtung 12 ist mit einer Stange 20 verbunden, deren (in Fig. 1 und 2 nicht gezeigtes) oberes Ende wiederum mit einer Anzeigevorrichtung (mittelbar oder unmittelbar) verbunden ist oder selbst eine Anzeigevorrichtung ausbildet. Beispielsweise ist es denkbar, dass ein oberes Ende der Stange 20 aus einer Öffnung herausragt (wenn die Stellung gemäß Fig. 2 vorliegt) oder innerhalb einer Öffnung verschwindet (wenn die Stellung gemäß Fig. 1 vorliegt). Alternativ ist es auch möglich, dass ein oberes Ende der Stange 20 eine mechanische Anzeigevorrichtung in eine erste Position verbringt, wenn die Stellung gemäß Fig. 2 vorliegt und in eine zweite Position, die vorliegt, wenn die Position gemäß Fig. 1 vorliegt. Beispielsweise könnte die Anzeigevorrichtung dann eine grüne Fläche sichtbar machen, wenn eine Bodenkontaktierung gemäß Fig. 2 vorliegt, oder eine rote Fläche, wenn eine solche Bodenkontaktierung nicht vorliegt.

Führungsteile 21 ermöglichen eine effiziente Führung des unteren Abschnitts 11 innerhalb des oberen Abschnittes 10. Dabei wird auch der weite Abstand dieser Führungsteile voneinander ausgenutzt, um einerseits eine zuverlässige Verstellung der Beinlänge zu ermöglichen und andererseits zuverlässig eine Bodenkontaktierung anzeigen zu können. Ein Wackeln oder Verkanten wird dadurch vermieden (oder zumindest minimiert), wenn die Anzeigevorrichtung ausgelöst wird.

Der Raststift 13 ist so verlagerbar, dass er entweder nur mit der Ausnehmung 16 in Eingriff gebracht ist (entriegelte Stellung) oder (wie in Fig. 1 und 2 gezeigt) sowohl mit der Ausnehmung 16 des oberen Abschnittes 10 in Verbindung steht als auch in eine der Ausnehmungen 17 des unteren Abschnitts 11 eingebracht ist. Zur entsprechenden Verlagerung des Raststiftes 13 können dazu übliche Einrichtungen vorgesehen sein (die im vorliegenden Fall nicht im Detail erkennbar sind). Beispielsweise kann dazu ein (ggf. federbelasteter) Betätigungsknopf 22 und/oder eine Zugeinrichtung, die durch das Bezugszeichen 23 angedeutet ist und ggf. den Raststift durch Ziehen, beispielsweis aufgrund einer (z.B. durch den Betätigungsknopf durchgeführten) Verlagerung, in die entriegelte Stellung bringt, und/oder eine Geometrie des Raststiftes 13, beispielsweise eine Schrägfläche 24 beitragen.

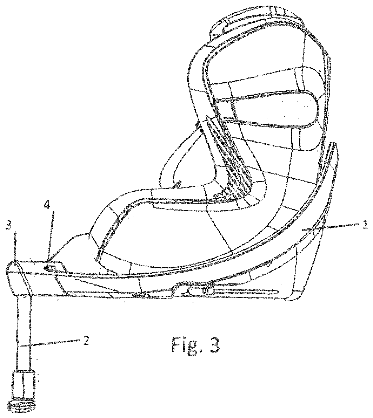

In Fig. 3 ist der gesamte Kindesitz, umfassend ein Sitzelement 1 (umfassend eine Basis und eine Sitzschale) sowie ein Stützbein 2, gezeigt. Eine mögliche Anzeigevorrichtung ist schematisch durch das Bezugszeichen 3 angedeutet. Zusätzlich oder alternativ kann die Anzeigevorrichtung auch beim Bezugszeichen 4 lokalisiert sein.

### Bezugszeichen

- 1: Sitzelement
- 2: Stützbein
- 3: Anzeigevorrichtung
- 4: Anzeigevorrichtung
- 10: oberer Abschnitt
- 11: unterer Abschnitt
- 12: Verriegelungseinrichtung
- 13: Raststift
- 14: Basisteil
- 15: Strecke
- 16: Ausnehmung
- 17: Ausnehmung
- 18: Feder
- 19: Anschlag
- 20: Stange
- 21: Führungsteil
- 22: Betätigungsknopf
- 23: Zugeinrichtung
- 24: Schrägfläche
- 25: oberes Ende

## Patentansprüche

1. Kindersitz zur Anbringung auf einem Kraftfahrzeugsitz, umfassend ein Sitzelement (1) sowie mindestens ein Stützbein (2) zum Abstützen des Kindersitzes an einem Untergrund, insbesondere Fußraum des Kraftfahrzeuges, wobei eine Anzeigevorrichtung (3) vorgesehen ist, die ausgebildet ist, um einen Bodenkontakt des Stützbeins mit dem Untergrund, insbesondere Fußraum, anzuzeigen, wobei das Stützbein (2) mindestens einen oberen teleskopartigen Abschnitt (10) und einen unteren teleskopartigen Abschnitt (11) aufweist, die zur Verlängerung und Verkürzung des Stützbeines gegeneinander verschieblich sind, wobei zwischen dem unteren teleskopartigen Abschnitt (11) und der Anzeigevorrichtung eine Wirkverbindung (12, 20) vorliegt, die derart ausgebildet ist, dass eine Verlagerung des unteren Abschnitts (11) gegenüber dem oberen Abschnitt (10) aufgrund eines Bodenkontaktes eines Stützbeinendes zu einem Auslösen der Anzeigevorrichtung führt, wobei die Wirkverbindung eine Stange (20) mit einer Länge von mindestens 10 cm umfasst.

2. Kindersitz nach Anspruch 1,
**dadurch gekennzeichnet, dass**
die Anzeigevorrichtung (3) an einem proximalen Ende des Stützbeines angeordnet ist und/oder
eine grüne Fläche sichtbar macht, wenn eine Bodenkontaktierung vorliegt, sowie eine rote Fläche, wenn eine solche Bodenkontaktierung nicht vorliegt.

3. Kindersitz nach Anspruch 1 oder 2,
**dadurch gekennzeichnet, dass**
die Wirkverbindung ausgebildet ist, um eine Kraft von dem unteren Abschnitt (11) zu der Anzeigevorrichtung mechanisch zu übertragen.

4. Kindersitz nach einem der vorhergehenden Ansprüche,
**dadurch gekennzeichnet, dass**
die Wirkverbindung zumindest abschnittsweise eine Verriegelungseinrichtung (12) umfasst.

5. Kindersitz nach einem der vorhergehenden Ansprüche,
**dadurch gekennzeichnet, dass**
die Wirkverbindung und/oder die Stange eine Länge aufweist/aufweisen, die mindestens 60%, vorzugsweise mindesten 80 % der Länge des oberen Abschnittes ausmacht.

6. Kindersitz nach einem der vorhergehenden Ansprüche,
**dadurch gekennzeichnet, dass**
eine Verriegelungseinrichtung (12) zur Einstellung einer Relativposition zwischen oberen und unterem Abschnitt vorgesehen ist, wobei oberer und unterer Abschnitt im verriegelten Zustand vorzugsweise um eine gewisse Wegstrecke, beispielsweise kleiner gleich 2 cm und/oder größer oder gleich 3 mm, bewegbar sind.

7. Kindersitz nach Anspruch 6,
**dadurch gekennzeichnet, dass**
im verriegelten Zustand des oberen und unteren Abschnittes, in dem die Länge des Stützbeins prinzipiell festgelegt ist, dennoch eine gewisse vordefinierte Relativbewegung zugelassen ist, so dass über die Wirkverbindung die Anzeigevorrichtung ausgelöst werden kann und/oder eine Länge des Stützbeines nur im entriegelten Zustand des oberen und unteren Abschnittes einstellbar ist.

8. Kindersitz nach Anspruch 4 und optional zusätzlich einem der Ansprüche 5 - 7,
**dadurch gekennzeichnet, dass**
eine Feder (18) vorgesehen ist, deren erstes Ende ortsfest an dem oberen Abschnitt (10), mittelbar oder unmittelbar, angebracht ist und deren zweites Ende ortsfest an der Wirkverbindung, beispielsweise der Stange, mittelbar oder unmittelbar, angeordnet ist derart, dass die Feder den oberen (10) und unteren (11) Abschnitt, im verrasteten Zustand, voneinander weg drängt.
wobei die Feder vorzugsweise, im verrasteten Zustand, mittelbar über die Verriegelungseinrichtung, ggf. ausschließlich über die Verriegelungseinrichtung, mit dem unteren Abschnitt verbunden ist und/oder
wobei die Feder (18) zwischen einem ortsfest an dem oberen Abschnitt (10) angebrachten Anschlag (19) und der Verriegelungseinrichtung (12) wirkt.

9. Kindersitz nach einem der vorhergehenden Ansprüche,
**dadurch gekennzeichnet, dass**
eine/die Verriegelungseinrichtung (12) mit der Stange (20) verbunden ist, deren oberes Ende wiederum mit der Anzeigevorrichtung, mittelbar oder unmittelbar, verbunden ist.
und/oder ein oberes Ende der Stange (20) die Anzeigevorrichtung mechanisch in eine erste Position verbringt, wenn ein Bodenkontakt des Stützbeinendes vorliegt, und in eine zweite Position, wenn kein Bodenkontakt des Stützbeinendes vorliegt.

10. Kindersitz nach Anspruch 4 und optional zusätzlich einem der Ansprüche 5 - 9,
**dadurch gekennzeichnet, dass**
die Wirkverbindung, insbesondere die Stange (20), im verrasteten Zustand, ortsfest mit dem unteren Abschnitt verbunden ist und beweglich gegenüber dem oberen Abschnitt (10) ist und/oder
dass die Wirkverbindung, insbesondere Stange (20), im entriegelten Zustand, in dem die Länge des Stützbeins eingestellt werden kann, sowohl gegenüber dem oberen Abschnitt (10) als auch gegenüber dem unteren Abschnitt (11) beweglich ist.

11. Kindersitz nach Anspruch 4 und optional zusätzlich einem der Ansprüche 5 - 10,
**dadurch gekennzeichnet, dass**
die Wirkverbindung und/oder Stange im entriegelten Zustand nur um eine geringe Wegstrecke, von beispielsweise kleiner oder gleich 2 cm, ggf. größer oder gleich 3 mm, gegenüber dem oberen Abschnitt bewegbar ist, jedoch frei gegenüber dem unteren Abschnitt bewegbar ist, nur begrenzt durch die maximal mögliche Verschiebung des oberen und des unteren Abschnittes gegeneinander, im entriegelten Zustand.

12. Kindersitz nach einem der vorhergehenden Ansprüche,
**dadurch gekennzeichnet, dass**
eine/die Verriegelungseinrichtung (12) ein Basisteil (14) und einen Raststift (13) umfasst, wobei der Raststift (13) beispielsweise durch einen federbelasteten Betätigungsknopf (22) verlagerbar ist.

13. Kindersitz nach einem der vorhergehenden Ansprüche,
**dadurch gekennzeichnet, dass**
das teleskopartige Stützbein genau zwei Abschnitte, die gegeneinander teleskopartig verschieblich sind, umfasst, nämlich den oberen Abschnitt und den unteren Abschnitt und/oder
dass der obere Abschnitt (10) den unteren Abschnitt (11) in einem überlappenden Bereich umschließt und/oder
dass der obere und/oder der untere Abschnitt durch ein Rohr oder ein Profil, beispielsweise C-Profil oder U-Profil ausgebildet wird/werden, wobei der obere Abschnitt vorzugsweise ein äußeres Rohr oder äußeres Profil, insbesondere äußeres U-Profil oder C-Profil, ausbildet und der untere Abschnitt vorzugsweise ein inneres Rohr oder inneres Profil, insbesondere inneres U-Profil oder C-Profil, ausbildet.

14. Kindersitz nach einem der vorhergehenden Ansprüche,
**dadurch gekennzeichnet, dass**
das Sitzelement (1) eine Basis und eine Sitzschale umfasst, wobei die Anzeigevorrichtung vorzugsweise oben an einem dem Stützbein zugeordneten Ende der Basis angeordnet ist.

15. Kindersitz nach einem der vorhergehenden Ansprüche,
**dadurch gekennzeichnet, dass**
die Stange (20) einen runden, elliptischen oder vieleckigen Querschnitt, z.B. rechteckigen Querschnitt, oder profilartigen Querschnitt, wie beispielsweise einen U-förmigen oder C-förmigen Querschnitt, aufweist.

## Claims

1. Child seat for mounting on a motor vehicle seat, comprising a seat element (1) and at least one support leg (2) for supporting the child seat on a ground, in particular the footwell of the motor vehicle, an indicating device (3) being provided which is designed to indicate a ground contact of the support leg with the ground, in particular the footwell, the support leg (2) having at least one upper telescopic section (10) and a lower telescopic section (11) which can be displaced with respect to one another in order to lengthen and shorten the supporting leg, wherein an operative connection (12, 20) is present between the lower telescopic section (11) and the display device, which is designed such that a displacement of the lower section (11) in relation to the upper section (10) leads to a triggering of the display device due to a ground contact of the support leg end, the operative connection comprising a rod (20) with a length of at least 10 cm.

2. Child seat according to claim 1, **characterized in that**
the display device (3) is arranged at a proximal end of the support leg, and/or
makes a green area visible if there is a ground contact and a red area if there is no such ground contact.

3. A child seat as claimed in claim 1 or 2, **characterized in that**
the operative connection is adapted to mechanically transmit a force from the lower portion (11) to the indicator device.

4. Child seat according to one of the preceding claims, **characterized in that** the operative connection comprises a locking device (12) at least in sections.

5. Child seat according to one of the preceding claims, **characterized in**
**that** the operative connection and/or the rod has/have a length which is at least 60%, preferably at least 80% of the length of the upper section.

6. Child seat according to any of the preceding claims,
**characterized in that**
a locking device (12) is provided for adjusting a relative position between the upper and lower sections, wherein the upper and lower sections are preferably movable by a certain distance, for example less than or equal to 2 cm and/or greater than or equal to 3 mm, in the locked state.

7. Child seat according to claim 6, **characterized in that**
in the locked state of the upper and lower sections, in which the length of the support leg is in principle fixed, a certain predefined relative movement is nevertheless permitted so that the indicator device can be triggered via the active connection
and/or a length of the support leg can only be adjusted in the unlocked state of the upper and lower sections.

8. Child seat according to claim 4 and optionally additionally one of the claims 5 - 7, **characterized in that**
a spring (18) is provided, the first end of which is fixedly attached to the upper section (10), indirectly or directly, and the second end of which is fixedly arranged on the operative connection, e.g. the rod, indirectly or directly, in such a way that the spring forces the upper (10) and lower (11) sections away from each other in the locked state.
wherein the spring is preferably, in the locked state, indirectly connected to the lower section via the locking device, optionally exclusively via the locking device, and/or
wherein the spring (18) acts between a stop (19) fixedly mounted on the upper portion (10) and the locking device (12).

9. Child seat according to any of the preceding claims, **characterized in that** a/the locking device (12) is connected to the rod (20), the upper end of which is in turn connected, indirectly or directly, to the indicator device.
and/or an upper end of the rod (20) mechanically moves the indicator to a first position when there is ground contact of the support leg end and to a second position when there is no ground contact of the support leg end.

10. Child seat according to claim 4 and optionally additionally one of the claims 5 - 9, **characterized in that**
the operative connection, in particular the rod (20), in the locked state, is fixedly connected to the lower section and is movable relative to the upper section (10) and/or
**in that** the operative connection, in particular rod (20), is movable both with respect to the upper section (10) and with respect to the lower section (11) in the unlocked state in which the length of the support leg can be adjusted.

11. Child seat according to claim 4 and optionally additionally one of the claims 5-10, **characterized in that**
the operative connection and/or rod is movable in the unlocked state only by a small distance, for example less than or equal to 2 cm, optionally greater than or equal to 3 mm, relative to the upper section, but is freely movable relative to the lower section, limited only by the maximum possible displacement of the upper and lower sections relative to each other in the unlocked state.

12. A child seat according to any one of the preceding claims, **characterized in that**
a/the locking device (12) comprises a base part (14) and a latching pin (13), wherein the latching pin (13) is displaceable, for example, by a spring-loaded actuating knob (22).

13. Child seat according to any of the preceding claims, **characterized in that** the telescopic support leg comprises exactly two sections which are telescopically displaceable with respect to each other, namely the upper section and the lower section and/or
**in that** the upper portion (10) encloses the lower portion (11) in an overlapping region and/or
**in that** the upper and/or the lower section is/are formed by a tube or a profile, for example a C-profile or U-profile, the upper section preferably forming an outer tube or outer profile, in particular an outer U-profile or C-profile.

14. Child seat according to any of the preceding claims, **characterized in**
**that**
the seat element (1) comprises a base and a seat shell, wherein the display device is preferably arranged at the top of an end of the base associated with the support leg.

15. A child seat according to any one of the preceding claims, **characterized in that**
the bar (20) has a round, elliptical or polygonal cross-section, e.g. rectangular cross-section, or profile-like cross-section, such as a U-shaped or C-shaped cross-section.

## Revendications

1. Siège enfant destiné à être monté sur un siège de véhicule automobile, comprenant un élément de siège (1) ainsi qu'au moins une jambe d'appui (2) pour l'appui du siège enfant sur un support, en particulier l'espace pour les pieds du véhicule automobile, un dispositif indicateur (3) étant prévu, qui est conçu pour indiquer un contact avec le sol de la jambe d'appui sur le support, en particulier l'espace pour les pieds, la jambe d'appui (2) présentant au moins une partie supérieure télescopique (10) et une partie inférieure télescopique (11), qui peuvent être déplacées l'une par rapport à l'autre pour allonger et raccourcir la jambe d'appui, une liaison active (12, 20) étant présente entre la partie inférieure télescopique (11) et le dispositif indicateur, laquelle est conçue de telle sorte qu'un déplacement de la partie inférieure (11) par rapport à la partie supérieure (10) entraîne, en raison d'un contact avec le sol d'une extrémité de jambe d'appui, un déclenchement du dispositif indicateur, la liaison active comprenant une tige (20) d'une longueur d'au moins 10 cm.

2. Siège enfant selon la revendication 1,
**caractérisé en ce**
**que** le dispositif indicateur (3) est disposé à une extrémité proximale de la jambe d'appui et/ou rend visible une surface verte lorsqu'un contact avec le sol est présent, et une surface rouge lorsqu'un tel contact avec le sol n'est pas présent.

3. Siège enfant selon la revendication 1 ou 2,
**caractérisé en ce**
**que** la liaison active est conçue pour transmettre mécaniquement une force de la partie inférieure (11) au dispositif indicateur.

4. Siège enfant selon l'une des revendications précédentes,
**caractérisé en ce**
**que** la liaison active comprend un moyen de verrouillage (12) au moins sur certaines parties.

5. Siège enfant selon l'une des revendications précédentes,
**caractérisé en ce**
**que** la liaison active et/ou la tige présente une longueur qui représente au moins 60 %, de préférence au moins 80 % de la longueur de la partie supérieure.

6. Siège enfant selon l'une des revendications précédentes,
**caractérisé en ce**
**qu'**un moyen de verrouillage (12) est prévu pour régler une position relative entre les parties supérieure et inférieure, les parties supérieure et inférieure pouvant de préférence être déplacées d'une certaine distance, par exemple inférieure ou égale à 2 cm et/ou supérieure ou égale à 3 mm, à l'état verrouillé.

7. Siège enfant selon la revendication 6,
**caractérisé en ce**
**qu'**à l'état verrouillé des parties supérieure et inférieure, dans lequel la longueur de la jambe d'appui est en principe fixée, un certain mouvement relatif prédéfini est néanmoins autorisé, de sorte que le dispositif indicateur peut être déclenché par l'intermédiaire de la liaison active et/ou une longueur de la jambe d'appui ne peut être réglée qu'à l'état déverrouillé des parties supérieure et inférieure.

8. Siège enfant selon la revendication 4 et, en option, selon l'une des revendications 5 à 7,
**caractérisé en ce**
**qu'**il est prévu un ressort (18) dont la première extrémité est montée de manière fixe sur la partie supérieure (10), directement ou indirectement, et dont la deuxième extrémité est disposée de manière fixe sur la liaison active, par exemple la tige, directement ou indirectement, de telle sorte que le ressort pousse les parties supérieure (10) et inférieure (11) à s'éloigner l'une de l'autre à l'état encliqueté,
le ressort étant de préférence, à l'état encliqueté, relié à la partie inférieure indirectement par l'intermédiaire du moyen de verrouillage, le cas échéant exclusivement par l'intermédiaire du moyen de verrouillage, et/ou le ressort (18) agissant entre une butée (19) montée de manière fixe sur la partie supérieure (10) et le moyen de verrouillage (12).

9. Siège enfant selon l'une des revendications précédentes,
**caractérisé en ce**
**qu'**un/le moyen de verrouillage (12) est relié à la tige (20) dont l'extrémité supérieure est elle-même reliée, directement ou indirectement, au dispositif indicateur,
et/ou qu'une extrémité supérieure de la tige (20) déplace mécaniquement le dispositif indicateur vers une première position lorsqu'un contact avec le sol de l'extrémité de jambe d'appui est présent et vers une deuxième position lorsqu'aucun contact avec le sol de l'extrémité de jambe de support n'est présent.

10. Siège enfant selon la revendication 4 et, en option, selon l'une des revendications 5 à 9,
**caractérisé en ce**
**que** la liaison active, en particulier la tige (20), à l'état encliqueté, est reliée de manière fixe à la partie inférieure et est mobile par rapport à la partie supérieure (10) et/ou que la liaison active, en particulier la tige (20), est mobile par rapport à la partie supérieure (10) ainsi que par rapport à la partie inférieure (11) à l'état déverrouillé dans lequel la longueur de la jambe d'appui peut être réglée.

11. Siège enfant selon la revendication 4 et, en option, selon l'une des revendications 5 à 10,
**caractérisé en ce**
**que** la liaison active et/ou la tige ne peut être déplacée par rapport à la partie supérieure que sur une faible distance, par exemple inférieure ou égale à 2 cm, le cas échéant supérieure ou égale à 3 mm, à l'état déverrouillé, mais peut être déplacée librement par rapport à la partie inférieure, en étant uniquement limitée par le déplacement maximal possible des parties supérieure et inférieure l'une par rapport à l'autre, à l'état déverrouillé.

12. Siège enfant selon l'une des revendications précédentes
**caractérisé en ce**
**qu'**un/le moyen de verrouillage (12) comprend une partie de base (14) et une tige d'encliquetage (13), la tige d'encliquetage (13) pouvant être déplacée, par exemple, par un bouton d'actionnement (22) sollicité par ressort.

13. Siège enfant selon l'une des revendications précédentes,
**caractérisé en ce**
**que** la jambe d'appui télescopique comprend exactement deux parties qui peuvent être déplacées de manière télescopique l'une par rapport à l'autre, à savoir la partie supérieure et la partie inférieure et/ou
**que** la partie supérieure (10) entoure la partie inférieure (11) dans une zone de chevauchement et/ou
**que** la partie supérieure et/ou la partie inférieure sont formées par un tube ou un profilé, par exemple un profilé en C ou un profilé en U, la partie supérieure formant de préférence un tube ou un profilé extérieur, en particulier un profilé en U ou un profilé en C extérieur, et la partie inférieure formant de préférence un tube ou un profilé intérieur, en particulier un profilé en U ou un profilé en C intérieur.

14. Siège pour enfant selon l'une des revendications précédentes,
**caractérisé en ce**
**que** l'élément de siège (1) comprend une base et une coque de siège, le dispositif indicateur étant de préférence disposé en haut à une extrémité de la base associée à la jambe d'appui.

15. Siège enfant selon l'une des revendications précédentes,
**caractérisé en ce**
**que** la tige (20) présente une section transversale ronde, elliptique ou polygonale, par exemple une section transversale rectangulaire, ou une section transversale de type profilé, comme par exemple une section transversale en forme de U ou en forme de C.
